# EUROPÄISCHE PATENTSCHRIFT

(11) **EP 0 652 854 B1**
(45) Veröffentlichungstag und Bekanntmachung des Hinweises auf die Patenterteilung: **13.08.1997**
(21) Anmeldenummer: 94911927.5
(22) Anmeldetag: 19.03.1994
(51) Int. Cl.: C03B 9/193, C03B 9/41, G01B 7/00, G01D 5/20

(54) **WEGAUFNEHMER FÜR DEN POSITIONSNACHWEIS EINES PRESSSTEMPELS**
TRAVEL SENSOR FOR DETECTING THE POSITION OF A PLUNGER
CAPTEUR DE DEPLACEMENT PERMETTANT D'INDIQUER LA POSITION D'UN POIN ON

(30) Priorität: 27.05.1993 DE 4317730
(43) Veröffentlichungstag der Anmeldung: 17.05.1995
(73) Patentinhaber: FIRMA HERMANN HEYE, D-31682 Obernkirchen (DE)
(72) Erfinder: GEISEL, Gerhard, D-31675 Bückeburg (DE)
(74) Vertreter: Kosel, Peter, Dipl.-Ing.
(86) Internationale Anmeldenummer: EP9400866
(87) Internationale Veröffentlichungsnummer: WO9427922

(56) Entgegenhaltungen:
- EP-A- 0 488 136
- DE-C- 3 401 465
- US-A- 5 139 559

## Beschreibung

Die Erfindung betrifft einen Preßstempelmechanismus einer glasformmaschine mit einem Wegaufnehmer nach dem Oberbegriff des Anspruchs 1.

Bei einem bekannten Preßstempelmechanismus dieser Art (DE-C1-34 01 465) ist die Spule koaxial zu der Kolbenstange zwischen der Führungsbuchse und dem Kolben angeordnet. Das Betätigungselement ist auf der der Spule zugewandten Kolbenseite konzentrisch zu der Kolbenstange befestigt und taucht in die Spule ein. Diese Bauweise benötigt einen verhältnismäßig großen axialen Bauraum. Dadurch ist einerseits der axiale Wegerfassungsbereich begrenzt und andererseits ein nachträglicher Einbau des Wegaufnehmers in bestehende KolbenZylinder-Einheiten vielfach nicht möglich. Die prozeßbedingten zyklischen Temperaturschwankungen können zum Ablösen der Spule von ihrem Träger führen. Die Fertigung der ringförmigen Fassung mit der Spule ist sehr aufwendig und teuer.

Aus der DE-A1-40 31 931 ist ein induktiver Längenmeßtaster an sich bekannt, der sich zur Verbesserung der Linearität oder zur Vergrößerung des Hubes eines Differentialtransformators mit einer an die Sekundärwicklung , angeschlossenen Auswerteelektronik bedient. Die stationäre Primärwicklung befindet sich in der Längsmitte außen auf einem rohrförmigen inneren Teil einer stationären ferromagnetischen Rückschlußeinrichtung, deren äußerer Teil als dünnwandiges Rohr in einer Bohrung eines Grundkörpers aus Messing festgelegt ist. Der innere Teil ist auf einem rohrförmigen Träger gehalten, der in einer Bohrung des Grundkörpers befestigt ist. Zwischen den Teilen besteht ein ringförmiger Luftspalt, in den ein rohrförmiger Kragen eines becherförmigen Spulenträgers eintaucht. In die Außenseite des Spulenträgers sind in axialem Abstand voneinander Teilwicklungen der Sekundärwicklung so eingelassen, daß sich die Teilwicklungen in einer axialen Mittelstellung des Spulenträgers in gleich großem axialen Abstand von der stationären Primärwicklung befinden. Ein Boden des Spulenträgers ist an einer konzentrischen Taststange befestigt, die sich durch den rohrförmigen Träger hindurch erstreckt und hinter den Enden des Trägers jeweils durch eine Lagerbuchse radial geführt ist. Anschlußdrähte gestatten die Beaufschlagung der stationären Primärwicklung mit einer Wechselspannung. Anschlußdrähte der beiden Teilwicklungen der verschiebbaren Sekundärwicklung führen zu einer Auswerteelektronik mit hochohmigem Eingang und einer phasenempfindlichen Gleichrichtereinrichtung.

Aus der DE-A1-31 09 930 A1 ist ein Weggeber für hydraulische Elemente, wie Kolben und Zylinder, an sich bekannt, die Temperaturschwankungen unterworfen sind. Die Nullpunktsdrift soll herabgesetzt werden. Ein elektrisch nicht leitender Stabkern ist relativ zu dem Zylinder fest, trägt eine mit hochfrequentem Wechselstrom durch Leitungen gespeiste, einlagige Zylinderspule und erstreckt sich durch den Kolben hindurch über den gesamten Kolbenweg in einen Innenraum der Kolbenstange. Kolben und Kolbenstange sind in der Umgebung des Stabkerns und seiner Spule mit einer elektrisch gut leitenden, diamagnetischen Buchse, vorzugsweise aus Messing oder Kupfer, ausgekleidet.

Der Erfindung liegt die Aufgabe zugrunde, den Einsatzbereich des Wegaufnehmers zu erweitern, seine Lebensdauer zu erhöhen und eine größere Strecke zur Positionsbestimmung des Kolbens bei gleichen Abmessungen des Gesamtmechanismus sowie eine kostengünstigere Fertigung zu ermöglichen.

Diese Aufgabe ist durch die Merkmale des Anspruchs 1 gelöst. Insbesondere findet eine pneumatische Kolben-Zylinder-Einheit Verwendung. Die Spule und das Betätigungselement sind vorzugsweise kreisringförmig ausgebildet. Es reicht in der Regel, nur den letzten Teil des Preßhubes des Kolbens, z.B. bis 45 mm, mit dem Wegaufnehmer zu erfassen. Die Spule wird durch eine Wechselstromquelle gespeist, die einen eingeprägten Wechselstrom liefert. Zwischen den Anschlußleitungen der Spule stellt sich eine Wechselspannung ein, die von der Größe der Induktivität der Spule abhängt. Diese Induktivität ist von der Anzahl der Windungen und der magnetischen Leitfähigkeit des Eisenkerns sowie von der Länge der magnetischen Feldlinien im Raum außerhalb des Eisens und der Spule abhängig. Werden die magnetischen Feldlinien, die außerhalb der Spule mit ihrem Eisenkern im Luftraum verlaufen, durch ein magnetisch leitfähiges Betätigungselement geführt, so daß die verbleibende Luftstrecke verringert wird, so steigt damit die Induktivität dieser Anordnung. Dies äußert sich durch ein Ansteigen der elektrischen Spannung an den Anschlußleitungen. Da das Betätigungselement auf dem Kolben montiert ist, kann somit anhand der elektrischen Spannung die axiale Stellung des Kolbens und damit der Kolbenstange und des Preßstempels durch ein elektrisches Spannungssignal hoher Reproduzierbarkeit meßtechnisch erfaßt werden. Beim Pressen eines Glaspostens in einer Vorform der Glasformmaschine gelangt der Kolben typisch in einen mittleren Bereich der Meßstrecke, wenn der richtige Füllgrad der Vorform erreicht ist. So läßt sich in jedem Arbeitshub des Preßstempels seine maximale Eindringtiefe in das Formwerkzeug meßtechnisch erfassen. Durch die im wesentlichen konzentrische, ineinandergeschachtelte Anordnung von Spule und Führungsbuchse wird wichtige axiale Baulänge gespart. Dadurch ist der Einsatzbereich des Wegaufnehmers erheblich erweitert, weil die gesamte axiale Länge der Preßstempeleinheit nicht veränderbar ist. Die Anordnung der Spule radial außerhalb der Führungsbuchse führt zu einer besseren Haftung der Spule auf ihrem Träger.

Gemäß Anspruch 2 ergibt sich eine besonders kompakte und betriebsgünstige Bauweise. Die Führungsbuchse kann austauschbar in der Haltebuchse gehalten sein. Eine bleibende, sichere Verbindung zwischen der Spule und der Haltebuchse ist durch diese Konstruktion begünstigt.

Die Merkmale des Anspruchs 3 bringen betriebliche Vorteile. Die Einheit läßt sich mit geringem Aufwand und schnell bei Bedarf austauschen.

Gemäß Anspruch 4 ergibt sich eine besonders sichere Funktion des Wegaufnehmers. Die Haltebuchse und der Halteflansch können einstückig oder mehrteilig ausgebildet sein.

Der Distanzring gemäß Anspruch 5 ermöglicht bei Bedarf eine Anpassung an unterschiedliche axiale Längen der Preßstempelmechanismen. Der Distanzring erleichtert das Aufbringen und die Befestigung der Spule auf der Haltebuchse. Außerdem kann der Distanzring Zentrierfunktionen der benachbarten Bauelemente übernehmen und für die Ausbildung der magnetischen Feldlinien im Ringraum zwischen der Spule und dem Distanzring herangezogen werden.

Wenn bei einem Distanzring gemäß Anspruch 6 das Betätigungselement aus magnetisch leitfähigem Stoff besteht, ist der Einfluß des Betätigungselements bei dessen Verschiebung in den Ringraum in Bezug auf eine große Spannungsänderung gering, weil die Summe aller Feldlinienlängen im Ringraum klein ist.

Wird dagegen gemäß Anspruch 7 vorgegangen, wobei der Distanzring selbst auch aus diamagnetischem, elektrisch leitfähigem Stoff bestehen kann, ist die Summe der Feldlinienlängen im Ringraum größer. Entsprechend ist dann die Spannungsänderung beim Verschieben des Betätigungselements in den Ringraum beträchtlich größer. Die elektrisch leitfähige Schicht kann z.B. aus Kupfer oder Aluminium bestehen und von verhältnismäßig geringer Dicke sein, weil nur geringe Ströme fließen.

Die Merkmale des Anspruchs 8 sind konstruktiv besonders günstig.

Gemäß Anspruch 9 kann als Kunstharz z.B. ein Epoxidharz mit einem passenden Härter verwendet werden, die unter Druck und erhöhter Temperatur zur Reaktion miteinander gebracht werden. Das Kunstharz und die Glasfasermatte bilden eine elektrische Isolierung der Spule gegenüber der Haltebuchse. Das Kunstharz durchtränkt die Glasfasermatte und die Spule und liefert nach dem Aushärten eine formstabile Spule mit fester Bindung an die Haltebuchse. Hohe Temperaturdifferenzen von bis zu 130° C führen nicht mehr zur Ablösung der Spule von ihrem Träger.

Die weitere Glasfasermatte gemäß Anspruch 10 wird ebenfalls von dem Kunstharz durchtränkt und mit ihm verpreßt. Sie bildet eine stabile Außenbandage, welche die Spule gegenüber den Umgebungseinflüssen resistent macht.

Gemäß Anspruch 11 ist die Steckbuchse besonders wirksam vor Verschmutzung geschützt und von außen leicht zugänglich. Die Steckbuchse kann in jedem Fall an einer günstig zu handhabenden Stelle, z.B. an einer Unterseite eines Außenflansches des Zylinders oder noch tiefer angeordnet sein.

Mit den Merkmalen des Anspruchs 12 kann die Kontaktierung mit einem Anschlußkabel achsparallel zur Kolben-Zylinder-Einheit erfolgen, was eine günstige, kompakte Bauform zumindest annähernd frei von radialem Platzbedarf ergibt.

Die Merkmale des Anspruchs 13 sind konstruktiv besonders günstig. Der Fortsatz kann z.B. in eine Gewindebohrung des Halteflansches eingeschraubt und bei der Montage durch miteinander fluchtende Aufnahmebohrungen oder Längsnuten des Distanzrings und des Außenflansches des Zylinders hindurchgeführt werden. So erreicht die Steckbuchse stets eine für die Handhabung günstige axiale Endlage.

Gemäß Anspruch 14 läßt sich das Betätigungselement besonders einfach an dem Kolben befestigen.

Die Merkmale des Anspruchs 15 dienen der Montageerleichterung des Betätigungselements.

Gemäß Anspruch 16 ergibt sich eine Dämpfung, wenn die Kolbenstange, was im normalen Glasformungsbetrieb nicht geschieht, ganz ausfährt und der Innenflansch zur Anlage an einer Anschlagfläche gelangt.

Durch die Merkmale des Anspruchs 17 kann die Strecke zur Positionsbestimmung des Kolbens noch einmal vergrößert werden.

Die Merkmale des Anspruchs 18 führen zu einer besonders verlustarmen Beeinflussung des Ringraums durch das magnetisch leitfähige Betätigungselement. Dadurch wird die Wirbelstrombildung begrenzt. Die Schlitze behindern den Fluß des elektrischen Stromes in Umfangsrichtung des Betätigungselements.

Wenn der Distanzring aus einem paramagnetischen, jedoch elektrisch nicht besonders gut leitenden Stoff, z.B. aus Grauguß, hergestellt wird, wird beim Verschieben des Betätigungselements gemäß Anspruch 19 über die Spule die Summe aller magnetischen Feldlinien vergrößert. Dies führt zu einer Reduzierung der Induktivität der Anordnung und somit der Spannung an den Anschlußleitungen der Spule. Dieser Effekt läßt sich zum Nachweis der Kolbenposition ebenfalls heranziehen, erfordert jedoch eine verhältnismäßig präzise Windungsanordnung der Spule.

Weitere Merkmale und Vorteile der Erfindung ergeben sich aus der nachfolgenden Beschreibung von Ausführungsbeispielen anhand der Zeichnungen. Es zeigt:
Fig. 1 einen Längsschnitt durch einen Wegaufnehmer mit zugehörigen Bauelementen eines Preßstempelmechanismus,
Fig. 2 ein Detail aus Fig. 1 in vergrößerter Darstellung und
Fig. 3 einen Längsschnitt durch eine andere Ausführugnsform des Wegaufnehmers.

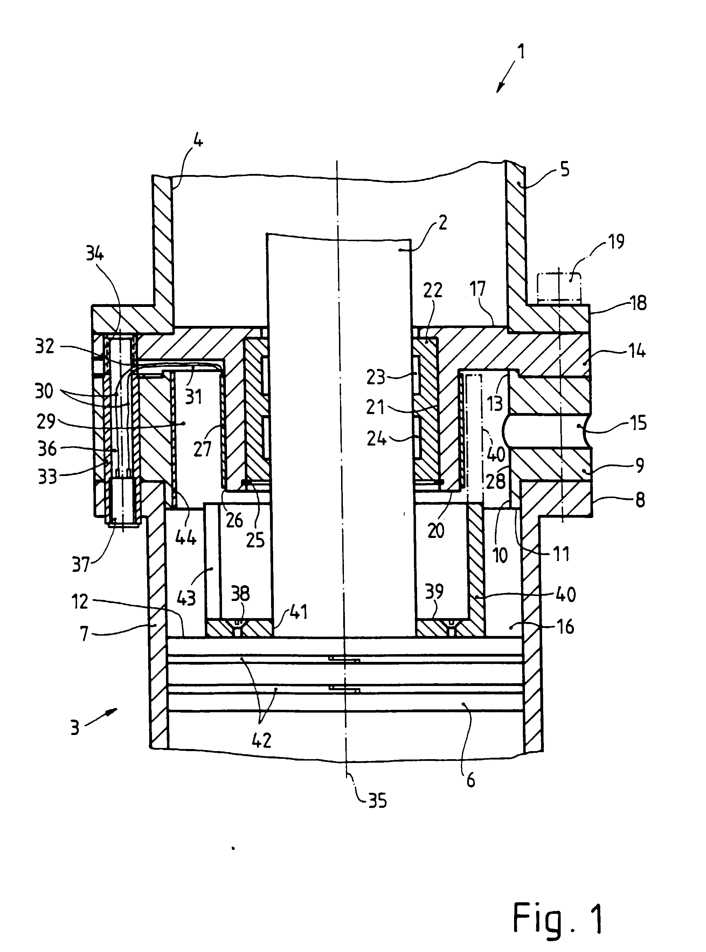

Fig. 1 zeigt einen Teil eines Preßstempelmechanismus 1 einer nicht weiter dargestellten Glasformmaschine.

In eine nicht dargestellte Vorform der Glasformmaschine wird zunächst ein Posten schmelzflüssigen Glases eingebracht, in den nachfolgend von unten her ein nicht gezeichneter Preßstempel eindringt, der oben an einer Kolbenstange (2) einer pneumatischen Kolben-Zylinder-Einheit 3 befestigt ist. Der Peßstempel ist in ebenfalls nicht gezeichneter Weise in radialer Richtung an einer Innenfläche 4 eines als Führungszylinder ausgebildeten Oberteils 5 geführt. Die Kolbenstange 2 ist an einem Kolben 6 der Kolben-Zylinder-Einheit 3 befestigt, der in einem Zylinder 7 unter der Wirkung von Druckluft verschiebbar ist. Der Kolben 6 ist mit Kolbenringen 42 gegenüber dem Zylinder 7 abgedichtet. Die Kolben-Zylinder-Einheit 3 ist doppeltwirkend ausgebildet.

Durch einen Außenflansch 8 des Zylinders 7 ist ein z.B. aus Grauguß oder VA-Stahl hergestellter Distanzring 9 abgestützt und über einen unteren Kragen 10 zentriert. Eine untere Anschlagfläche 11 des Kragens 10 bildet eine Wegbegrenzung für eine obere Ringfläche 12 des Kolbens 6. Normalerweise wird es nicht zur Berührung zwischen der oberen Ringfläche 12 und der unteren Anschlagfläche 11 kommen, weil der Preßstempel durch den in der Vorform befindlichen Glasposten daran gehindert wird, stets seinen maximalen Preßhub auszufahren. Dies kann nur geschehen, wenn sich entweder zu wenig oder gar keine Glasmasse in der Vorform befindet. Üblich ist, daß der Preßstempel je nach dem Füllgrad der Vorform mit Glasmasse seinen Preßhub mehr oder minder vor seinem maximalen Preßhub beendet.

Der Distanzring 9 trägt und zentriert über einen oberen Kragen 13 einen z.B. aus Grauguß hergestellten Halteflansch 14. Der Distanzring 9 ist ferner mit einem kolbenstangenseitigen Anschluß 15 zur Be- und Entlüftung eines oberen Zylinderraums 16 versehen.

Der Halteflansch 14 trägt und zentriert über einen oberen Kragen 17 einen Außenflansch 18 des Oberteils 5.

In über den Umfang verteilte Gewindebohrungen des Außenflansches 8 sind Schrauben 19 eingeschraubt, von denen in der Zeichnung eine strichpunktiert umfangsversetzt angedeutet ist. Jede Schraube 19 durchdringt Durchgangsbohrungen in dem Außenflansch 18, dem Halteflansch 14 und dem Distanzring 9. Wenn die Schrauben 19 fest angezogen sind, besteht von dem Zylinder 7 bis zum Oberteil 5 eine zentrierte und fest miteinander verspannte Einheit.

Von dem Halteflansch 14 erstreckt sich nach unten hin in den Zylinderraum 16 eine kreisringförmige Haltebuchse 20, die innen eine Aufnahmebohrung 21 für eine die Kolbenstange 2 in radialer Richtung führende Führungsbuchse 22 aufweist. Die Führungsbuchse 22 ist innen mit Ringnuten 23 und 24 versehen, die in Abhängigkeit vom Werkstoff der Führungsbuchse 22 entweder im Sinne einer Labyrinthdichtung freigelassen oder mit Dichtungsringen ausgefüllt werden. Die Führungsbuchse 22 ist in der Aufnahmebohrung 21 durch einen Sicherungsring 25 gehalten.

Die Haltebuchse 20 ist einstückig mit dem Halteflansch 14 z.B. aus Grauguß hergestellt und magnetisch leitfähig. Auf einer Außenfläche 26 der Haltebuchse 20 ist eine zweckmäßigerweise durch ein Kunstharz, z.B. Epoxidharz, stabilisierte Spule 27 befestigt. Die Befestigung kann z.B. durch Klebung geschehen. Zwischen der Spule 27 und einer Innenfläche 28 des Distanzrings 9 besteht ein Ringraum 29.

Anschlußleitungen 30 der Spule 27 sind, von der Spule 27 ausgehend, zunächst radial nach außen in einem ersten Kanal 31 des Halteflansches 14 geführt. Die Anschlußleitungen 30 durchdringen sodann ein Fenster 32 in einem rohrförmigen unteren Fortsatz 33 des Halteflansches 14, der zuvor in eine Gewindebohrung 34 des Halteflansches 14 eingeschraubt worden ist und sich parallel zu einer Längsachse 35 der Kolben-Zylinder-Einheit 3 erstreckt. Der Fortsatz 33 definiert einen zweiten Kanal 36, in dem die Anschlußleitungen 30 im Anschluß an das Fenster 32 nach unten bis zu einer Steckbuchse 37 geführt sind. Eine Vergußmasse in den Kanälen 31, 36 dichtet den oberen Zylinderraum 16 nach außen ab und fixiert die Anschlußleitungen 30 der Spule 27. Die Steckbuchse 37 ist von unten zugänglich und daher gut erreichbar und gegen Verschmutzungen geschützt.

An der oberen Ringfläche 12 des Kolbens 6 ist mit Schrauben 38 ein Innenflansch 39 eines kreisringförmigen Betätigungselements 40 lösbar befestigt. Der Innenflansch 39 liegt mit einer zentralen Bohrung 41 an der Kolbenstange 2 an und wird dadurch zentriert.

Das Betätigungselement 40 ist dazu bestimmt, auf dem letzten Teil des Preßhubes in den Ringraum 29 mehr oder minder tief einzudringen und dabei die Induktivität der Spule 27 zu ändern. Die maximale Eindringtiefe des Betätigungselements 40 in den Ringraum 29 ist in der Zeichnung auf der rechten Seite strichpunktiert angedeutet. In dieser Stellung liegt die obere Ringfläche 12 des Kolbens 6 an der unteren Anschlagfläche 11 des Distanzrings 9 an. Besteht das Betätigungselement 40 aus paramagnetischem Material, hat die Spule 27 ihre höchste Induktivität. Besteht dagegen das Betätigungselement 40 aus diamagnetischem, aber elektrisch leitfähigem Material, so ist die Induktivität der Spule 27 am niedrigsten.

Das Betätigungselement 40 kann mit mehreren, über den Umfang verteilten, z.B. 1 mm breiten Längsschlitzen 43 versehen sein, von denen in Fig. 1 nur einer auf der linken Seite angedeutet ist. Die Längsschlitze begrenzen die Wirbelstrombildung in vorteilhafter Weise.

In Fig. 1 ist auch eine besondere Ausführungsform des Distanzrings 9 auf der linken Seite eingezeichnet. Dort ist mit der Innenfläche 28 eine elektrisch leitfähige Schicht 44 in Gestalt einer Aluminiumbuchse 44 verbunden.

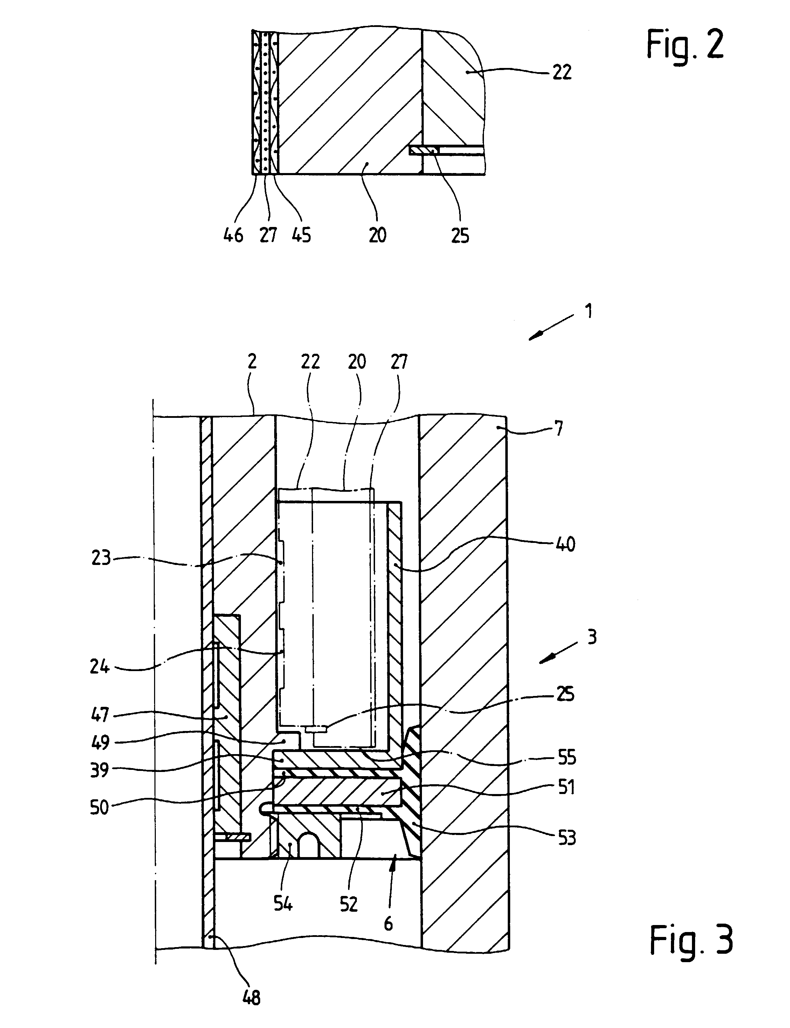

Fig. 2 zeigt eine Möglichkeit, um die Spule 27 formstabil zu gestalten und sicher an der Außenseite der Haltebuchse 20 zu befestigen. Dazu ist zwischen der Spule 27 und der Haltebuchse 20 eine Glasfasermatte 45 angeordnet. Auch eine Außenseite der Spule 27 ist mit einer weiteren Glasfasermatte 46 belegt. Die Glasfasermatten 45, 46 und die Spule 27 sind miteinander und die Glasfasermatte 45 außerdem mit der Außenfläche der Haltebuchse 20 durch ein Kunstharz, z.B. ein Epoxidharz, fest verbunden. Das Epoxidharz und ein zugehöriger Härter werden unter erhöhter Temperatur und Druckeinwirkung zur Reaktion miteinander gebracht und in der gewünschten Formgebung der Spule 27 und der Glasfasermatten 45, 46 relativ zu der Haltebuchse 20 ausgehärtet. Es ergibt sich ein formstabiler, fest an der Außenseite der Haltebuchse 20 haftender Spulenkörper. Diese Haftung geht auch bei der im Betrieb der Glasformmaschine anfallenden zyklischen Temperaturbelastung und bei besonders hohen Temperaturdifferenzen während des Anfahrens der Glasformmaschine nicht verloren.

Fig. 3 zeigt eine weitere Ausführungsform des Preßstempelmechanismus 1, wobei gleiche Teile wie bei den zuvor beschriebenen Ausführungsbeispielen mit gleichen Bezugszahlen versehen sind.

Die Kolbenstange 2 ist rohrförmig ausgebildet und trägt an ihrer Innenseite eine Führungsbuchse 47, die auf einem zentralen, stationären Luftrohr 48 gleitet.

Der Innenflansch 39 des kreisringförmigen Betätigungselements 40 liegt oben an einem Außenflansch 49 der Kolbenstange 2 und unten an einer elastischen Deckschicht 50 auf einem ringförmigen Kern 51 des Kolbens 6 an. Der Kern 51 ist innen verschiebbar an der Kolbenstange geführt und an seiner Unterseite ebenfalls mit einer elastischen Deckschicht 52 versehen. Die Deckschichten 50,52 sind einstückig mit einer Dichtungsmanschette 53 ausgeführt, die zwischen dem Kern 51 und dem Zylinder 7 ausgebildet ist.

Die Deckschichten 50, 52, der Kern 51 und der Innenflansch 39 sind durch eine Ringmutter 54 fest gegen den Außenflansch 49 gespannt. Wie in Fig. 3 strichpunktiert angedeutet, bildet bei diesem Ausführungsbeispiel die Haltebuchse 20 eine untere Anschlagfläche 55 für den Innenflansch 39. Dadurch findet eine Wegbegrenzung für den Kolben 6 nach oben hin statt. Wenn es zu einer Berührung zwischen dem Innenflansch 39 und der Anschlagfläche 55 kommt, wird dieser Stoß durch die elastischen Deckschichten 50, 52 gedämpft. Dadurch wird die Lebensdauer der Kolben-Zylinder-Einheit 3 erhöht.

Gemäß Fig. 3 ist ein weiterer Vorteil dadurch erzielt, daß der Innenflansch und noch der unterste Teil des Betätigungselements 40 versenkt in dem Kolben 6 angeordnet sind. Dadurch ist Wegstrecke in axialer Richtung gewonnen, auf der eine Wegerfassung der Kolbenstellung erfolgen kann.

## Patentansprüche

1. Preßstempelmechanismus einer Glasformmaschine mit einem Wegaufnehmer für den Nachweis der axialen Position des Preßstempels,
wobei der Preßstempel an einer Kolbenstange (2) einer Kolben-Zylinder-Einheit (3) montiert ist,
wobei eine relativ zu dem Zylinder (7) feste, ringförmige Spule (27) des Wegaufnehmers mit einem an dem Kolben (6) montierten, metallischen Betätigungselement (40) des Wegaufnehmers zur Änderung der Induktivität der Spule (27) in Abhängigkeit von der axialen Relativstellung des Kolbens (6) und des Zylinders (7) zusammenwirkt,
wobei die Spule (27) im Bereich eines die Kolbenstange (2) durchlassenden und die Kolbenstange (2) durch eine Führungsbuchse (22) führenden Endes des Zylinders (7), die Kolbenstange (2) umgebend, angeordnet ist,
wobei das Betätigungselement (40) auf der dem Preßstempel zugewandten Seite des Kolbens (6) angeordnet und ringförmig ausgebildet ist,
und wobei Anschlußleitungen (30) der Spule (27) mit einer elektrischen Auswerteschaltung verbunden sind,
dadurch gekennzeichnet, daß die Spule (27) zumindest einen Teil der axialen Länge der Führungsbuchse (22) umgibt,
und daß am Ende eines Preßhubes des Kolbens (6) das Betätigungselement (40) die Spule (27) teilweise oder ganz umgibt.

2. Preßstempelmechanismus nach Anspruch 1, dadurch gekennzeichnet, daß die Führungsbuchse (22) in einer relativ zu dem Zylinder (7) festen Haltebuchse (20) angeordnet ist, und daß die Spule (27) außen an der Haltebuchse (20) befestigt ist.

3. Preßstempelmechanismus nach Anspruch 2, dadurch gekennzeichnet, daß ein von dem Kolben (6) abgewandtes Ende der Haltebuchse (20) an einem Halteflansch (14) befestigt ist, und daß der Halteflansch (14) lösbar mit dem Zylinder (7) verbunden ist.

4. Preßstempelmechanismus nach Anspruch 3, dadurch gekennzeichnet, daß die Haltebuchse (20) und der Halteflansch (14) aus magnetisch leitfähigem Stoff bestehen.

5. Preßstempelmechanismus nach Anspruch 3 oder 4, dadurch gekennzeichnet, daß zwischen dem Zylinder (7) und dem Halteflansch (14) ein Distanzring (9) angeordnet ist.

6. Preßstempelmechanismus nach Anspruch 5, dadurch gekennzeichnet, daß der Distanzring (9) aus magnetisch leitfähigem Stoff besteht.

7. Preßstempelmechanismus nach Anspruch 5 oder 6, dadurch gekennzeichnet, daß eine der Spule (27) zugewandte Innenfläche (28) des Distanzrings (9) mit einer elektrisch leitfähigen Schicht (44) versehen ist.

8. Preßstempelmechanismus nach einem der Ansprüche 5 bis 7, dadurch gekennzeichnet, daß die Kolben-Zylinder-Einheit (3) doppeltwirkend ausgebildet ist, und daß ein kolbenstangenseitiger Anschluß (15) für das Druckmedium in dem Distanzring (9) vorgesehen ist.

9. Preßstempelmechanismus nach einem der Ansprüche 2 bis 8, dadurch gekennzeichnet, daß zwischen der Spule 27 und der Heltebuchse (20) eine Glasfasermatte (45) angeordnet ist, und daß durch ein Kunstharz die Spule (27) und die Glasfasermatte (45) aneinander und die Glasfasermatte (45) an der Haltebuchse (20) befestigt sind.

10. Preßstempelmechanismus nach Anspruch 9, dadurch gekennzeichnet, daß durch das Kunstharz auch eine weitere Glasfasermatte (46) an einer Außenseite der Spule (27) befestigt ist.

11. Preßstempelmechanismus nach einem der Ansprüche 3 bis 10, dadurch gekennzeichnet, daß die Anschlußleitungen (30) der Spule (27), ausgehend von der Spule (27), zunächst im wesentlichen in radialer Richtung nach außen in einem ersten Kanal (31) des Halteflansches (14) und dann in einem zweiten Kanal (36) im wesentlichen parallel zu einer Längsachse (35) der Kolben-Zylinder-Einheit (3) nach unten bis zu einer Steckbuchse (37) geführt sind.

12. Preßstempelmechanismus nach Anspruch 11, dadurch gekennzeichnet, daß der zweite Kanal (36) und die Steckbuchse (37) in einem unteren Fortsatz (33) des Halteflansches (14) vorgesehen sind.

13. Preßstempelmechanismus nach Anspruch 12, dadurch gekennzeichnet, daß der untere Fortsatz (33) rohrförmig ausgebildet ist.

14. Preßstempelmechanismus nach einem der Ansprüche 1 bis 13, dadurch gekennzeichnet, daß das Betätigungselement (40) über einen Innenflansch (39) relativ zu dem Kolben (6) lösbar festgelegt ist.

15. Preßstempelmechanismus nach Anspruch 14, dadurch gekennzeichnet, daß der Innenflansch (39) mit einer zentralen Bohrung (41) an der Kolbenstange (2) anliegt und dadurch zentriert ist.

16. Preßstempelmechanismus nach Anspruch 14 oder 15, dadurch gekennzeichent, daß der Innenflansch (39) an einer elastischen Deckschicht (50) des Kolbens (6) anliegt.

17. Preßstempelmechanismus nach einem der Ansprüche 14 bis 16, dadurch gekennzeichnet, daß der Innenflansch (39) zumindest mit einem Teil seiner axialen Erstreckung in dem Kolben (6) versenkt angeordnet ist.

18. Preßstempelmechanismus nach einem der Ansprüche 1 bis 17, dadurch gekennzeichnet, daß das ringförmige Betätigungselement (40) magnetisch leitfähig ausgebildet und mit mehreren, über den Umfang verteilten Längsschlitzen (43) versehen ist.

19. Preßstempelmechanismus nach einem der Ansprüche 1 bis 17, dadurch gekennzeichnet, daß das ringförmige Betätigungselement (40) aus einem diamagnetischen, elektrisch leitfähigen Stoff besteht.

## Claims

1. Pressing plunger mechanism of a glass forming machine comprising a displacement transducer for identifying the axial position of the pressing plunger,
wherein the pressing plunger is mounted on a piston rod (2) of a piston-cylinder unit (3),
wherein an annular coil (27) of the transducer which is fixed relative to the cylinder (7) cooperates with a metallic actuating member (40) of the transducer which is mounted on the piston (6) in order to change the inductance of the coil (27) in dependence upon the axial relative position of the piston (6) and of the cylinder (7),
wherein the coil (27) is arranged in the region of one end of the cylinder (7), encircling the piston rod (2), with said cylinder end having the piston rod (2) both extending therethrough and also guided by a guide sleeve (22), wherein the actuating member (40) is annular and is arranged on the side of the piston (6) which faces the pressing plunger,
and wherein connecting means (30) for the coil (27) are connected to an electrical evaluation circuit,
characterized in that the coil (27) encircles at least a part of the axial length of the guide sleeve (22), and that the actuating member (40) partially or fully encompasses the coil (27) at the end of a pressing stroke of the piston (6).

2. Pressing plunger mechanism according to claim 1, characterised in that the guide sleeve (22) is arranged in a support sleeve (20) fixed relative to the cylinder (7), and the coil (27) is fixed externally on the support sleeve (20).

3. Pressing plunger mechanism according to claim 2, characterized in that an end of the support sleeve (20) remote from the piston (6) is fixed to a retaining flange (14), and the retaining flange (14) is releasably connected to the cylinder (7).

4. Pressing plunger mechanism according to claim 3, characterized in that the support sleeve (20) and the retaining flange (14) are of magnetically conductive material.

5. Pressing plunger mechanism according to claim 3 or 4, characterized in that a spacer ring (9) is arranged between the cylinder (7) and the retaining flange (14).

6. Pressing plunger mechanism according to claim 5, characterized in that the spacer ring (9) is of magnetically conductive material.

7. Pressing plunger mechanism according to claim 5 or 6, characterized in that an internal surface (28) of the spacer ring (9) which faces the coil (27) is provided with an electrically conductive layer (44).

8. Pressing plunger mechanism according to one of claims 5 to 7, characterized in that the piston-cylinder unit (3) is double-acting, and a connection (15) for the supply of pressurised medium is provided in the spacer ring (9) on the piston rod side of the piston.

9. Pressing plunger mechanism according to one of claims 2 to 8, characterized in that a fibreglass mat (45) is arranged between the coil (27) and the support sleeve (20), and the coil (27) and the fibreglass mat (45) are fixed to each other by a synthetic resin and the fibreglass mat (45) is fixed to the support sleeve (20) by a synthetic resin.

10. Pressure plunger mechanism according to claim 9, characterized in that a further fibreglass mat (46) is fixed by the synthetic resin to the outside of the coil (27).

11. Pressing plunger mechanism according to one of claims 3 to 10, characterized in that the connecting means (30) for the coil (27), starting from the coil (27), are guided first substantially radially outwardly in a first passage (31) in the retaining flange (14) and then in a second passage (36) substantially parallel to a longitudinal axis (35) of the piston-cylinder unit (3) downwards to a plug socket (37).

12. Pressing plunger mechanism according to claim 11, characterized in that the second passage (36) and the plug socket (37) are provided in a lower extension (33) of the retaining flange (14).

13. Pressing plunger mechanism according to claim 12, characterized in that the lower extension (33) is tubular.

14. Pressing plunger mechanism according to one of claims 1 to 13, characterized in that the actuating member (40) is releasably held relative to the piston (6) by means of an internal flange (39).

15. Pressing plunger mechanism according to claim 14, characterized in that the internal flange (39) has a central bore (41) whose periphery contacts the piston rod (2) and is centered thereby.

16. Pressing plunger mechanism according to claim 14 or 15, characterized in that the internal flange (39) contacts an elastic cover layer (50) of the piston (6).

17. Pressing plunger mechanism according to one of claims 14 to 16, characterised in that the internal flange (39) is sunk into the piston (6) at least over a part of its axial extent.

18. Pressing plunger mechanism according to one of claims 1 to 17, characterized in that the annular actuating member (40) is magnetically conductive and is provided with a plurality of longitudinal slots (43) spaced around the periphery.

19. Pressing plunger mechanism according to one of claims 1 to 17, characterized in that the annular actuating member (40) is of a diamagnetic, electrically conductive material.

## Revendications

1. Mécanisme de poinçon d'une machine à mouler le verre avec un capteur de déplacement pour la mise en évidence de la position axiale du poinçon, dans lequel le poinçon est monté sur une tige de piston (2) d'un vérin (3), dans lequel un enroulement (27) annulaire du capteur de déplacement fixe par rapport au cylindre (7) coopère avec un élément d'actionnement (40) métallique du capteur de déplacement monté sur le piston (6) en vue de modifier l'inductance de l'enroulement (27) en fonction de la position relative axiale du piston (6) et du cylindre (7), dans lequel l'enroulement (27) est disposé dans la région d'une extrémité du cylindre (7) laissant passer la tige de piston (2) et guidant la tige de piston (2) à l'aide d'une douille de guidage (22) et qui entoure la tige de piston (2), dans lequel l'élément d'actionnement (40) est disposé sur le côté du piston (6) orienté vers le poinçon et conçu de forme annulaire, et dans lequel des lignes de connexion (30) de l'enroulement (27) sont reliées avec un circuit électrique d'interprétation, caractérisé en ce que l'enroulement (27) entoure au moins une partie de la longueur axiale de la douille de guidage (22), et en ce qu'à la fin d'une course de pressage du piston (6) l'élément d'actionnement (40) entoure partiellement ou entièrement l'enroulement (27).

2. Mécanisme de poinçon selon la revendication 1, caractérisé en ce que la douille de guidage (22) est disposée dans une douille de maintien (20) fixe par rapport au cylindre (7), et en ce que l'enroulement (27) est fixé sur l'extérieur de la douille de maintien (20).

3. Mécanisme de poinçon selon la revendication 2, caractérisé en ce qu'une extrémité de la douille de maintien (20) orientée à l'opposé du piston (6) est fixée sur une bride de maintien (14), et en ce que la bride de maintien (14) est reliée de manière amovible au cylindre (7).

4. Mécanisme de poinçon selon la revendication 3, caractérisé en ce que la douille de maintien (20) et la bride de maintien (14) se composent de matériau conducteur magnétique.

5. Mécanisme de poinçon selon la revendication 3 ou 4, caractérisé en ce qu'une bague d'espacement (9) est disposée entre le cylindre (7) et la bride de maintien (14).

6. Mécanisme de poinçon selon la revendication 5, caractérisé en ce que la bague d'espacement (9) se compose de matériau conducteur magnétique.

7. Mécanisme de poinçon selon la revendication 5 ou 6, caractérisé en ce qu'une surface intérieure (28) de la bague d'espacement (9) orientée vers l'enroulement (27) est dotée d'une couche (44) conductrice électrique.

8. Mécanisme de poinçon selon l'une ou l'ensemble des revendications 5 à 7, caractérisé en ce que le vérin (3) est à double action, et en ce qu'il est prévu dans la bague d'espacement (9)un raccord (15) du côté de la tige de piston.

9. Mécanisme de poinçon selon l'une ou l'ensemble des revendications 2 à 8, caractérisé en ce qu'une nappe de fibres de verre (45) est disposée entre l'enroulement (27) et la douille de maintien (20), et en ce que l'enroulement (27) et la nappe de fibres de verre (45)sont fixés entre eux et la nappe de fibres de verre (45) à la douille de maintien (20) par une résine synthétique.

10. Mécanisme de poinçon selon la revendication 9, caractérisé en ce que la résine synthétique fixe une autre nappe de fibres de verre (46) sur une face extérieure de l'enroulement (27).

11. Mécanisme de poinçon selon l'une ou l'ensemble des revendications 3 à 10, caractérisé en ce que les lignes de connexion (30) de l'enroulement (27), partant de l'enroulement (27), sont d'abord guidées sensiblement dans le sens radial vers l'extérieur dans un premier canal (31) de la bride de maintien (14) puis dans un deuxième canal (36) sensiblement parallèle à un axe longitudinal (35) du vérin (3) vers le bas, jusqu'à une prise de connexion (37).

12. Mécanisme de poinçon selon la revendication 11, caractérisé en ce que le deuxième canal (36) et la prise de connexion (37) sont prévus dans une saillie inférieure (33) de la bride de maintien (14).

13. Mécanisme de poinçon selon la revendication 12, caractérisé en ce que la saillie inférieure (33) est de forme tubulaire.

14. Mécanisme de poinçon selon l'une ou l'ensemble des revendications 1 à 13, caractérisé en ce que l'élément d'actionnement (40) est fixé de façon amovible par rapport au piston (6) à l'aide d'une bride intérieure (39).

15. Mécanisme de poinçon selon la revendication 14, caractérisé en ce que la bride intérieure (39) repose avec un alésage central (41) sur la tige de piston (2) et est ainsi centrée.

16. Mécanisme de poinçon selon la revendication 14 ou 15, caractérisé en ce que la bride intérieure (39) repose sur une couche de couverture élastique (50) du piston (6).

17. Mécanisme de poinçon selon l'une ou l'ensemble des revendications 14 à 16, caractérisé en ce que la bride intérieure (39) est disposée sur au moins une partie de son étendue axiale en contrebas dans le piston (6).

18. Mécanisme de poinçon selon l'une ou l'ensemble des revendications 1 à 17, caractérisé en ce que l'élément d'actionnement (40) annulaire est conducteur magnétique et il est pourvu de plusieurs fentes longitudinales (43) réparties sur sa circonférence.

19. Mécanisme de poinçon selon l'une ou l'ensemble des revendications 1 à 17, caractérisé en ce que l'élément d'actionnement (40) annulaire se compose d'un matériau diamagnétique et conducteur électrique.
